# EUROPEAN PATENT APPLICATION

(11) **EP 4 336 248 A1**
(43) Date of publication of application: **13.03.2024**
(21) Application number: 23814082.6
(22) Date of filing: 09.03.2023
(51) Int. Cl.: G02C 7/06, G02C 7/02, G02C 7/04

(54) **OPHTHALMIC LENS AND FRAME GLASSES HAVING SAME**

(30) Priority: 30.05.2022 CN 202210602454; 22.07.2022 CN 202210869171; 22.07.2022 CN 202221916689 U; 27.07.2022 CN 202210890733; 27.07.2022 CN 202221959148 U; 17.10.2022 CN 202211268086; 28.12.2022 CN 202211698087; 28.12.2022 CN 202223532292 U
(71) Applicant: Zhuhai Fitlens Medical Technology Co., Ltd, Beijing 100000 (CN); Fitlens Ltd., Nesher 3688306 (IL)
(72) Inventor: LIU, Yuxiao, Beijing 100000 (CN); WANG, Su, Beijing 100000 (CN); HE, Tianrui, Beijing 100000 (CN); BAI, Yujing, Beijing 100020 (CN)
(74) Representative: Flach Bauer & Partner Patentanwälte mbB
(86) International application number: PCT/CN2023/080586
(87) International publication number: WO 2023/231497

(57) **Abstract**

The present application relates to an ophthalmic lens and frame eyeglasses comprising the lens. The ophthalmic lens includes a central portion, multiple first refractive regions, and multiple second refractive regions. The multiple first refractive regions are arranged in a first zone surrounding the central portion, while the multiple second refractive regions are arranged in a second zone farther away from the central portion compared to the first zone. The central portion has a prescription power based on the human eye, and the first and second refractive regions have different powers than the prescription power. Furthermore, the total area ratio of the multiple first refractive regions to the area of the first zone is greater than the total area ratio of the multiple second refractive regions to the area of the second zone. As a result, the present application allows for more effective management and control of myopia progression.

## Description

### Technical Field:

This application relates to the technical field of ophthalmic lenses, more specifically, it relates to ophthalmic lenses with multiple micro defocus regions and frame eyeglasses incorporating them.

### Background of the Invention:

Ametropia of the human eye include myopia, hyperopia, and astigmatism, among which, myopia is the most common ametropia, particularly with a higher prevalence among young people. When the eyes are in a relaxed state of accommodation, parallel light rays from the outside world, after passing through the eye's refractive system, focus in front of the retina instead of on the central fovea, which will cause distant objects to appear blurry. This condition is known as myopia, which occurs when the axial length of the eye is longer than the focal length of the eye's optical system.

Typically, ophthalmic devices such as frame eyeglasses or contact lenses are used to correct or improve a patient's vision. For instance, negative lenses are used to correct myopia, and positive lenses are used to correct hyperopia. Conventional ophthalmic lenses used for myopia correction are single-vision (monofocal) spherical lenses, meaning the dioptric power is the same from the center to the periphery of the lens. The best Petzval focus generated by a single-vision spherical lens is spherical in shape, while the one generated by the eyeball is generally ellipsoidal. This results in the peripheral Petzval focus falling behind the retina, causing hyperopia defocus, which further promotes the elongation of the eye axis and the progression of myopia.

Currently, various ophthalmic lenses exist for managing and controlling myopia progression (referred to as "myopia management/control" hereinafter). One such lens involves arranging multiple micro-lenses on a single-vision spherical lens to form images in front of the retina, suppressing myopia progression (see CN 104678572 A).

However, there remains a demand for myopia management/control lenses that effectively inhibit axial elongation of the eye without significantly affecting visual quality. Additionally, it is desirable for myopia management/control lenses to improve patient compliance and/or reduce interindividual variability, thus enhancing the effectiveness of myopia management and control.

### Summary of the Invention:

To address the problems at least partially in the prior art, according to the first aspect of this application, an ophthalmic lens is provided. The lens comprises a central portion, multiple first refractive regions, and multiple second refractive regions. The multiple first refractive regions are arranged in a first zone surrounding the central portion, while the multiple second refractive regions are arranged in a second zone farther away from the central portion than the first zone. The central portion, either partially or entirely, has prescription power based on an individual's eye prescription. The multiple first refractive regions and multiple second refractive regions have different defocus powers from the prescription power, and refractive region the ratio of the total area of the multiple first refractive regions to the area of the first zone is greater than the ratio of the total area of the multiple second refractive regions to the area of the second zone.

Optionally, the density of the multiple first refractive regions within the first zone is greater than the density of the multiple second refractive regions within the second zone, and/or the average spacing between the multiple first refractive regions is smaller than the average spacing between the multiple second refractive regions.

Optionally, the multiple first refractive regions are configured such that a part or all of refractive region when the ophthalmic lens is worn by a wearer, a part or all of the incoming light beams passing through the multiple first refractive regions are projected onto an area between 10 to 20 degrees from the fovea of the wearer's retina.

Optionally, the multiple first refractive regions are partially or entirely arranged within an annular zone with an inner diameter of 9.0mm to an outer diameter of 15.0mm, or an annular zone with an inner diameter of 9.5mm to an outer diameter of 14.0mm, or an annular zone with an inner diameter of 11.0mm to an outer diameter of 14.0mm, all centered on the ophthalmic lens.

Optionally, the multiple first refractive regions are arranged without gaps, while the multiple second refractive regions are arranged with gaps.

Optionally, the maximum size of the projection of each of the multiple first refractive regions and the multiple second refractive regions on the ophthalmic lens is independently selected from the range of 0.5 mm to 2.2 mm, and/or the projection of each of the multiple first refractive regions and the multiple second refractive regions on the ophthalmic lens has a circular shape, and/or the multiple first refractive regions and the multiple second refractive regions may have surface shapes that are selected from spherical, aspherical, or toric shapes, and/or the multiple second refractive regions have equal projected areas on the ophthalmic lens.

Optionally, each of the multiple first refractive regions has dioptric power obtained by adding a positive defocus power to the prescription power, and/or each of the multiple second refractive regions has dioptric power obtained by adding a positive defocus power to the prescription power, or the dioptric power of both the multiple first refractive regions and the multiple second refractive regions is the same, or along the radial direction of the ophthalmic lens, the defocus
power of the multiple first refractive regions and the multiple second refractive regions increases gradually or increases in a stepwise manner with increasing radial distance, and/or the size of the multiple first refractive regions and the multiple second refractive regions decreases gradually or decreases in a stepwise manner with increasing radial distance, or along the radial direction of the ophthalmic lens, the defocus power of the multiple first refractive regions and the multiple second refractive regions decreases gradually or decreases in a stepwise manner with increasing radial distance, and/or the size of the multiple first refractive regions and the multiple second refractive regions increases gradually or increases in a stepwise manner with increasing radial distance.

Optionally, the maximum size of the central portion is selected from 3.0mm to 11.0mm, and/or the central portion is a circular zone centered on the ophthalmic lens, with a diameter selected from 3.0mm to 11.0mm, and/or the first zone is an annular zone centered on the ophthalmic lens, with an inner diameter selected from 3.0mm to 11.0mm and an outer diameter selected from 15.0mm to 28.6mm, and/or the second zone is an annular zone centered on the ophthalmic lens.

Optionally, the total area ratio of the multiple first refractive regions within the first zone is greater than or equal to 60% and less than or equal to 78.5%, or greater than 63% and less than or equal to 78.5%, or greater than 66% and less than or equal to 78.5%, and/or the total area ratio of the multiple second refractive regions within the second zone is less than 60%, or less than 57%, or less than 54%.

Optionally, the first zone includes one or more first patterns, and the first zone is partially or entirely a first annular zone centered on the ophthalmic lens with an inner diameter of 9mm and an outer diameter of 15mm. Within any individual first pattern in the first annular zone, the total area ratio of the first refractive regions is greater than 70% and less than 78.5%, or greater than 72% and less than 78.5%.

Optionally, the first zone includes one or more first patterns, and a part or all of the multiple first refractive regions arranged within one or more of the first patterns. And/or the second zone includes one or more second patterns, and a part or all of the multiple second refractive regions arranged within one or more of the second patterns.

Optionally, both the first patterns and the second patterns are annular patterns centered on the ophthalmic lens with the same center as the lens, or the second patterns are sectorial annular patterns centered on the ophthalmic lens with the same center as the lens.

Optionally, the spacing between any adjacent two second patterns are equal to the spacing between any adjacent two first patterns, and/or the spacing between any adjacent two second patterns are equal to the sum of the spacing between adjacent first and second patterns. Alternatively, the spacing between any adjacent two second patterns, the spacing between any adjacent two first patterns, and/or the sum of the spacing between adjacent first and second patterns is zero. Alternatively, the spacing between any adjacent two first patterns are less than or equal to 0.5mm.

Optionally, the number of first patterns is 1-4, and the number of second patterns is 1-15.

Optionally, the first refractive regions within at least one of the first patterns are uniformly distributed, and/or the second refractive regions within at least one of the second patterns are uniformly distributed.

Optionally, within at least one of the first patterns, the edges of the adjacent first refractive regions are adjacent to each other, and/or the spacing between the first refractive regions are selected from 0-0.5mm. And/or the spacing between the second refractive regions within at least one of the second patterns is greater than the maximum spacing between the first refractive regions, and/or the spacing between the second refractive regions in the second pattern decreases as the second patterns get closer to the center of the ophthalmic lens. And/or in the pattern that includes all the first patterns and all the second patterns, the spacing between the first refractive regions or the second refractive regions within the pattern decreases as the second patterns gets closer to the center of the ophthalmic lens.

Optionally, the total area ratio of the multiple first refractive regions within the first zone is greater than or equal to 60% and less than or equal to 78.5%, or greater than or equal to 70% and less than or equal to 78.5%. And/or in the case of multiple first patterns within the first zone, the total area ratio of the first refractive regions within each first pattern is greater than or equal to 60% and less than or equal to 78.5%. And/or in the case of multiple first patterns within the first zone, the total area ratio of the first refractive regions within at least two first patterns are greater than or equal to 70% and less than or equal to 78.5%. And/or the total area ratio of the multiple second refractive regions within at least one of the second patterns is less than 60% and greater than or equal to 30%, or less than 60% and greater than or equal to 35%, or less than 60% and greater than or equal to 40%. And/or in the case of multiple second patterns within the second zone, each second pattern has a total area ratio of the second refractive regions that is less than 60% and greater than or equal to 30%.

Optionally, in the case of multiple first patterns within the first zone, the total area ratio of the first refractive regions in the first pattern increases as the first patterns get closer to the center of the ophthalmic lens, And/or in the case where the second zone includes multiple second patterns, the total area ratio of the second refractive regions in the second pattern increases as the second patterns get closer to the center of the ophthalmic lens. And/or the total area ratio of the first refractive regions in each first pattern is greater than the total area ratio of the second refractive regions in each second pattern.

Optionally, the multiple first refractive regions are distributed along multiple rays or curves originating from the center of the ophthalmic lens. And/or the multiple second refractive regions are distributed along multiple rays or curves originating from the center of the ophthalmic lens.

Optionally, each ray or curve has a distribution of both first refractive regions and second refractive regions, and/or the multiple rays or curves are evenly distributed on the ophthalmic lens.

Optionally, on the same ray or curve, the first refractive regions have a consistent positive defocus power, and/or the second refractive regions have a consistent positive defocus power, and/or the first refractive regions and second refractive regions have a consistent positive defocus power. Alternatively, on the same ray or curve, the first refractive regions have a consistent size, and/or the second refractive regions have a consistent size, and/or the first refractive regions and second refractive regions have a consistent size. Alternatively, on the same ray or curve, the changing trend in positive defocus power of the first refractive regions is opposite to the changing trend in their size, and/or the changing trend in positive defocus power of the second refractive regions is opposite to the changing trend in their size. Alternatively, on the same ray or curve, the size of the first refractive regions and the second refractive regions increases gradually or increases in a stepwise manner with the distance from the center of the ophthalmic lens, and/or on the same ray or curve, the positive defocus power of the first refractive regions and the second refractive regions decreases gradually or decreases in a stepwise manner with the distance from the center of the lens.

Optionally, the adjacent first refractive regions and/or adjacent second refractive regions on the same ray or curve are contiguous to each other.

Optionally, the number of rays or curves is 16-40, or 26-35.

Optionally, on each ray or curve, the number of first refractive regions is less than the number of second refractive regions. And/or when the number of rays is 2n, the rays form n lines.

Optionally, the multiple first refractive regions and the multiple second refractive regions are configured to maintain substantially constant image jumps throughout the first and second zones.

Optionally, the coefficient of variation of image jumps for the multiple first refractive regions and the multiple second refractive regions is less than 20% throughout the first and second zones.

Optionally, within the entire second zone, the coefficient of variation of image jumps for the multiple second refractive regions are less than 15%, or less than 12%, or less than 10%.

Optionally, the total area ratio of the first refractive regions set on the temporal side of the first zone is different from the total area ratio of the first refractive regions set on the nasal side of the first zone. And/or the positive defocus power of the first refractive regions is asymmetrically set on the temporal and nasal sides of the first zone. And/or the total area ratio of the second refractive regions set on the temporal side of the second zone is different from the total area ratio of the second refractive regions set on the nasal side of the second zone. And/or the positive defocus power of the second refractive regions is asymmetrically set on the temporal and nasal sides of the second zone.

Optionally, the total area ratio of the first refractive regions set on the temporal side of the first zone is greater than the total area ratio of the first refractive regions set on the nasal side of the first zone. And/or the average positive defocus power of the first refractive regions set on the temporal side of the first zone is greater than the average positive defocus power of the first refractive regions set on the nasal side of the first zone. And/or the total area ratio of the second refractive regions set on the temporal side of the second zone is greater than the total area ratio of the second refractive regions set on the nasal side of the second zone. And/or the average positive defocus power of the second refractive regions set on the temporal side of the second zone is greater than the average positive defocus power of the second refractive regions set on the nasal side of the second zone.

Optionally, the ophthalmic lens is divided into multiple sectorial zones with the center of the ophthalmic lens as the origin, and in each sectorial zone, the first refractive regions are independently set, and the second refractive regions are independently set.

It should be understood that the expression "selected from..." means that any value within the numerical range following it can be chosen, including the endpoints of that numerical range.

It should be understood that the centerline of a pattern or ring mentioned in this application refers to the line connecting the midpoints of the radial width of the pattern or ring. Additionally, the term "center" of the first/second refractive region refers to the geometric center of the projection of the shape of the refractive region on the main view of the lens.

Simplified forms of concepts are introduced in the specification, which will be further explained in the detailed description section. The description of the embodiments in this section is not intended to limit the essential features and necessary technical features of the claimed technical solution, nor is it intended to limit the scope of protection of the claimed technical solution.

The following description of the embodiments is provided to better understand the advantages and features of the present application, in conjunction with the accompanying drawings.

### Description of the Drawings:

The following drawings are part of this application and are used to understand the principles of the present application. The drawings illustrate exemplary embodiments and their descriptions to explain the principles of the present application. In the drawings:
Figure 1 is a front view of an ophthalmic lens according to an exemplary embodiment of the present application.
Figure 2 is a front view of an ophthalmic lens according to another exemplary embodiment of the present application.
Figure 3 is an enlarged view of Figure 2.
Figure 4 is a front view of an ophthalmic lens according to yet another exemplary embodiment of the present application.
Figure 5 is a front view of an ophthalmic lens according to yet another exemplary embodiment of the present application.
Figure 6 is an enlarged view of Figure 5.
Figure 7 is a data chart comparing an ophthalmic lens according to an exemplary embodiment of the present application with a control example.
Figures 8A-8E are simplified schematic views of ophthalmic lenses according to different exemplary embodiments of the present application, showing different distributions of refractive regions. The outlines of all micro lenses are not drawn for clarity of illustrating the arrangement pattern of the micro lenses.
Figure 9 is a front view of an ophthalmic lens according to yet another exemplary embodiment of the present application.

Among them, the above-mentioned drawings include the following drawing marks:
1. Ophthalmic lens,
2. First refractive regions
   2a. Inner first patterns
   2b. Outer first patterns
3. Second refractive regions
4. Rays
   41. Additional patterns
   42. Curves
   43. Compound lines
5. Central portion
6. Peripheral zone
7. Intermediate zone
8. First zone
9. Second zone
21. First ring
31. Second ring

### Detailed Description of the Invention:

To thoroughly understand the embodiments of the present application, detailed structures are presented in the following description. However, those skilled in the art will appreciate that the following description is merely illustrative of the preferred embodiments and that the application may be implemented without one or more of the details described. Additionally, in order to avoid confusion with the present application, certain well-known technical features in the art are not described in detail.

In order to thoroughly understand the implementation method of this application, detailed structures will be presented in the following description. Obviously, the implementation of this application is not limited to the specific details familiar to the technical personnel in this field. The best embodiment of this application is described in detail below, but in addition to these detailed descriptions, this application may also have other embodiments.

To suppress the progression of refractive errors in the eye and provide clear vision when wearing glasses, one aspect of the present application provides an ophthalmic lens.

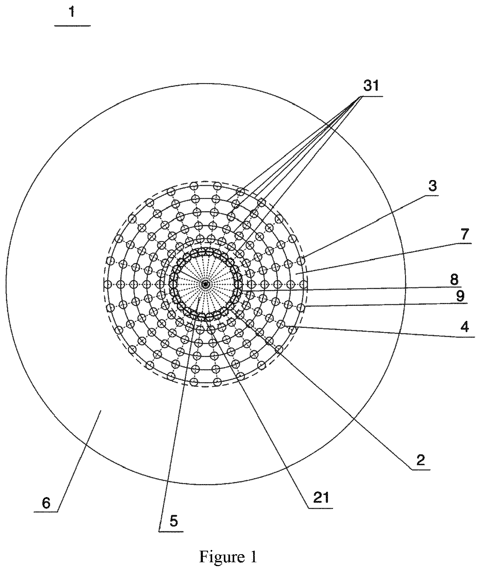

First, Figure 1 is used as an example to describe the ophthalmic lens of the present application in detail.

As shown in Figure 1, the ophthalmic lens 1 includes a central portion 5, multiple first refractive region 2, and multiple second refractive region 3. The multiple first refractive region 2 are arranged within the first zone 8 (the region enclosed by two dashed lines tangent to the multiple first refractive region 2, as shown in Figure 1) surrounding the central portion 5. The multiple second refractive region 3 are arranged within the second zone 9 (the region enclosed by two dashed lines tangent to the innermost and outermost multiple second refractive region 3, as shown in Figure 1) further away from the central portion 5 than the first zone 8.

The part or all of the central portion 5 can have a prescription based on the refractive power of the human eye (the user/wearer's eye). In some embodiments, the central portion 5 is designed to align with the wearer's pupil when looking straight ahead after wearing the glasses. This ensures that parallel rays of light entering the pupil during distance vision pass through the central portion 5 and focus precisely on the fovea centralis, ensuring clear vision. The prescription power corresponds to the refractive power specified in the prescription provided by the vision examination organization and is commonly referred to as dioptric powers. In the case of myopia, the prescription power can be negative. In some embodiments, the wearer may not have reached the myopia standard, but their reserve for farsightedness is insufficient. In this case, the prescription power can be 0 or positive to prevent myopia. In some embodiments, the central portion 5 can be a monofocal region with prescription power, while in other embodiments, the central portion 5 can be a multi-focal region with continuous variations in power, such as a progressive multifocal region. In this case, only a portion of the central portion 5 has prescription power.

The multiple first refractive region 2 and multiple second refractive region 3, arranged in the periphery of the central portion 5, have defocus powers different from the prescription power. Therefore, the first refractive region 2 and second refractive region 3 can focus light outside the retina of the eye, thereby suppressing the progression of refractive errors.

In some embodiments, at least a portion of the areas on the ophthalmic lens 1 where the first refractive region 2 and second refractive region 3 are not arranged have prescription power. For example, the central portion 5 shown in Figure 1, Figure 2, Figure 4, or Figure 5, the area between the first zone 8 and the second zone 9, the peripheral area 6 outside the first zone 8 and the second zone 9, and the intermediate area 7 between the individual first refractive region 2 and second refractive region 3 can have prescription power. Preferably, in some embodiments, the areas on the ophthalmic lens 1 where the first refractive region 2 and second refractive region 3 are not arranged (such as the central portion 5 shown in Figure 1, Figure 2, Figure 4, or Figure 5, the area between the first zone 8 and the second zone 9, the peripheral zone 6 outside the first zone 8 and the second zone 9, and the intermediate area 7 between the individual first refractive region 2 and second refractive region 3) can all have prescription power. Setting the gaps between the multiple first refractive region 2 and/or multiple second refractive region 3 to have prescription power can provide better visual outcomes for patients, improving patient compliance and enhancing the management and control of myopia. Particularly, when the gaps between the multiple first refractive region 2 and/or multiple second refractive region 3 are continuous, it can provide superior visual outcomes for patients and further improve the management and control of myopia.

Preferably, in some embodiments, each individual first refractive region 2 can have defocus power that is increased positively from the prescription power, meaning that the overall defocus power of the lens corresponding to the first refractive region 2 is more positive than the prescription power. In this document, the positive defocus power added to the prescription power is referred to as the add power of the first refractive regions. Additionally or alternatively, in some embodiments, each individual second refractive region 3 can have defocus power that is increased positively from the prescription power, meaning that the overall defocus power of the lens corresponding to the second refractive region 3 is more positive than the prescription power. In this document, the positive defocus power added to the prescription power is referred to as the add power of the second refractive regions. Therefore, by adding positive power in the first refractive region 2 and second refractive region 3, the defocus power in specific micro areas outside the central portion 5, such as -0.75D, is more positive compared to the defocus power in the central portion 5, such as -3.5D. This creates myopic defocus on the peripheral retina that is perceptible by the retina but not by the brain, controlling axial elongation without significant impact on visual quality. As a result, it helps prevent myopia or slows down its progression.

In some embodiments, each individual first refractive region 2 can have uniform defocus power or different defocus powers. The same applies to the individual second refractive region 3. In some embodiments, the defocus power in the multiple first refractive region 2 and multiple second refractive region 3 can be the same.

In some embodiments, along the radial direction of the ophthalmic lens, the defocus power in the first refractive region 2 or second refractive region 3 can remain constant, gradually increase or decrease, or increase or decrease in a stepwise manner with increasing radial distance. The term "radial direction of the lens" refers to the direction from the center of the lens towards the periphery in the projected lens diagram. The so-called "stepwise increase or decrease" refers to the first dioptric power present in the first refractive regions 2 or the second refractive regions 3 arranged in several adjacent patterns (later we will discuss the so-called "patterns" in detail), while the first refractive regions 2 or the second refractive regions 3 inside several patterns outside the said patterns may have the second dioptric power. The second defocus power can be greater or smaller than the first defocus power. For example, along the radial direction of the ophthalmic lens, the first refractive region 2 and second refractive region 3 can overall have a gradually or stepwise increasing or decreasing defocus power with increasing radial distance.

Preferably, in some embodiments where the defocus power in the first refractive region 2 or second refractive region 3 varies with radial distance, it is advantageous for the size of the first refractive region 2 or second refractive region 3 to also vary with radial distance, and the direction of size variation is opposite to the direction of defocus power variation. In this application, the size of the first refractive region 2 or second refractive region 3 refers to the size of their projected shape on the lens, such as the maximum size. It should be understood that the term "maximum size" refers to the largest dimension of the shape in each direction. In the case of circular-shaped projected shapes of the refractive regions, such as shown in Figure 1, the size can refer to the diameter of the shape. For example, in some cases where the defocus power in the first refractive region 2 or second refractive region 3 decreases gradually or decreases in a stepwise manner with increasing radial distance, the size of the first refractive region 2 or second refractive region 3 can gradually increase or increase in a stepwise manner with increasing radial distance. This helps maintain essentially constant low-level "image jumps" throughout the range of the lens, providing good visual effects and facilitating wearer adaptation, thereby improving wearer compliance.

The image jump can be simply expressed by multiplying the add power of an individual first or second refractive region by its corresponding maximum size (e.g., diameter) on the lens. In this case, the term "essentially constant" means that the multiple of the coefficient of variation (CV), of the product of the first refractive regions and second refractive regions within the entire range of the lens where the first refractive regions and second refractive regions are located (e.g., the entire range of the first and second zones), is less than 30%, preferably less than 25%, and more preferably less than 20%. Technical personnel in this field should understand that the coefficient of variation (CV) refers to the ratio of the standard deviation to the mean. In addition, it should be understood that in addition to the methods mentioned above that vary with the radial distance, other methods can be used to design the add power and maximum size of each first or second refractive regions, in order to achieve the desired image jump. Additionally, in some embodiments, in order to improve peripheral visual quality, the image jump variation of the second refractive regions set on the outside can be made more constant. The image jump of a single second refractive region is represented by the product of the addition power and maximum size of the single second refractive region. In some embodiments, the CV of the image jump of multiple second refractive regions within the entire second zone can be less than 15%, preferably less than 12%, and more preferably less than 10%. Additionally, in some embodiments, in order to ensure the myopia control effect of the second refractive regions set in the periphery, the CV of the image jump of multiple second refractive regions within the entire second zone can be greater than 1%, preferably greater than 2%, and more preferably greater than 3%. In some embodiments, the range of the CV of the image jump of multiple second refractive regions can be arbitrarily set by combining the above upper and lower limit values.

Preferably, the add power of the first refractive region 2 or second refractive region 3 relative to the central portion 5 can be selected from the range of + 1.0D to +10.0D, for example, +1.0D, +1.5D, +2.5D, +3.0D, +3.5D, +4.0D, +4.5D, +5.0D, +5.5D, +6.0D, +6.5D, +7.0D, +7.5D, +8.0D, +8.5D, +9.0D, +9.5D, or +10.0D.

In some exemplary embodiments, the individual first refractive region 2 or second refractive region 3 can be additional micro-lenses attached to the original lens, for example, convex lenses. Alternatively, the first refractive region 2 or second refractive region 3 can have the same contour as the original lens, i.e., they do not protrude from the original lens. In this case, the first refractive region 2 or second refractive region 3 can have a refractive index different from the original lens. For example, the first refractive region 2 or second refractive region 3 can be made of a different material than the original lens, or the refractive index of different regions of the lens material can be adjusted by adjusting the ion concentration during material polymerization, or the refractive index can be changed by re-polymerizing specific regions using ultraviolet irradiation.

In the case where both the first refractive regions and the second refractive regions are micro-lenses, the individual first refractive regions can be considered as micro-lenses located nearer the center of the lens, while the individual second refractive regions can be considered as micro-lenses located farther away from the center of the lens. The terms "nearer" and "farther" used here are relative, rather than absolute.

In some embodiments, each individual first refractive region 2 or second refractive region 3 can have a projection shape on the lens that is a circle, oval (ellipse), polygon, or other shapes. For polygons, the number of sides can be greater than or equal to 6. As shown in Figure 1, when the first refractive region 2 are circular, any two adjacent first refractive region 2 can be tangent to each other, meaning they are set without any gap between them. It should be understood that in this application, terms such as "tangent," "adjacent," or "zero spacing" should include the presence of a certain amount of error resulting from, for example, measurement or processing.

In some embodiments, the maximum size of the projection of each first refractive region 2 or second refractive region 3 on the lens can be independently selected from a range of 0.5-2.2mm, for example, it can be 0.5mm, 0.6mm, 0.7mm, 0.8mm, 0.9mm, 1.0mm, 1.1mm, 1.2mm, 1.3mm, 1.4mm, 1.5mm, 1.6mm, 1.7mm, 1.8mm, 1.9mm, 2.0mm, 2.1mm, or 2.2mm, or any value in between. In some embodiments, when the first refractive region 2 or second refractive region 3 have circular projection shapes on the lens, the diameter of the circle represents the maximum size, which can be within the range of 0.5-2.2mm. In some exemplary embodiments, the area of the projection of multiple second refractive region 3 on the ophthalmic lens can be equal. In some exemplary embodiments, the area of the projection of multiple first refractive region 2 on the ophthalmic lens can be equal. Alternatively, in some exemplary embodiments, at least a portion of multiple first refractive region 2 or multiple second refractive region 3 can have equal projected areas on the ophthalmic lens.

For example, the individual first refractive region 2 or second refractive region 3 can have surfaces with a selected shape, such as spherical, non-spherical, or complex curved surfaces. Multiple first refractive region 2 can have consistent surface shapes or different surface shapes. Multiple second refractive region 3 can have consistent surface shapes or different surface shapes.

It should be understood that the shapes, spacing, and other dimensions of the various regions of the ophthalmic lens discussed in this application refer to the shape and size of their planar projection on the ophthalmic lens or, for example, the main view of the ophthalmic lens shown in the figures. In this application, since the curvature radius of the lens surface is much larger than the size of each refractive region, the region locally arranged in each refractive region can be considered as essentially flat. Therefore, the projection of the refractive regions on the ophthalmic lens can be considered as their projection on the main view of the ophthalmic lens. In some embodiments, the first refractive region 2 and second refractive region 3 can be arranged on the outer surface (i.e., the surface away from the eye) of the ophthalmic lens, and the main view of the ophthalmic lens shown in the figures is the planar projection of that outer surface. Of course, in other embodiments, the first refractive region 2 and second refractive region 3 can be arranged on the inner surface (i.e., the surface closer to the eye) of the ophthalmic lens, and the main view of the ophthalmic lens shown in the figures is the planar projection of that inner surface.

While Figure 1 illustrates the center region 5 as a circular zone centered on the ophthalmic lens 1, in other embodiments, the center region 5 can have different shapes, such as polygons or other rotationally symmetric shapes. The maximum size of the center region 5 can be within the range of 3.0-11.0mm, for example, it can be 3.0mm, 4.0mm, 5.0mm, 6.0mm, 7.0mm, 8.0mm, 9.0mm, 10.0mm, or 11.0mm, or any value in between. When the center region 5 is circular, as shown in Figure 1, the diameter of the circle represents the maximum size, which can be within the range of 3.0-11.0mm.

As shown in Figure 1, the first zone 8 surrounds the center region 5, with its inner edge coinciding with the outer edge of the center region 5 and tangent to the inner side of the first refractive region 2 within the innermost ring, and its outer edge tangent to the outer side of these first refractive region 2, as indicated by the dashed lines in the figure. In some embodiments, the inner edge diameter of the first zone can be selected from 3.0-11.0mm, and the outer edge diameter can be selected from 15.0-28.6mm.

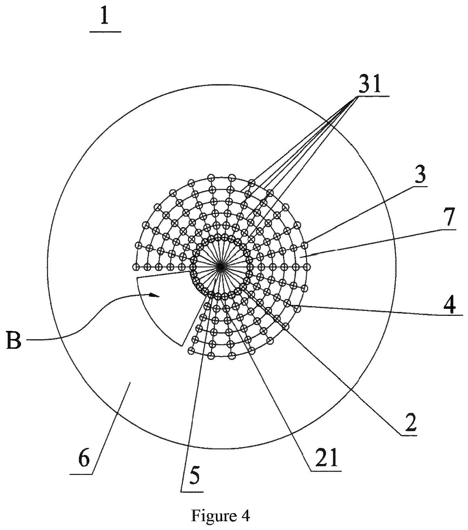

As shown in Figure 1, the second zone 9 surrounds the first zone 8 and is also an annular zone centered on the ophthalmic lens, with its inner edge tangent to the inner side of the innermost second refractive region 3 and its outer edge tangent to the outer side of the outermost second refractive region 3, as indicated by the dashed lines in the figure. The second zone 9 is farther from the center region 5 than the first zone 8. It should be understood that although Figure 1 illustrates the second zone 9 surrounding the first zone 8, the present invention is not limited to this configuration. In some embodiments, the second zone 9 can partially surround the first zone 8, as will be described in more detail with reference to Figure 4.

Multiple first refractive region 2 can be arranged in the first zone 8, which is closer to the center region 5, while multiple second refractive region 3 can be arranged in the second zone 9, which is farther from the center region 5. In some exemplary embodiments, to suppress the progression of refractive errors while maintaining clear vision after wearing the lens, the density of the first refractive region 2 in the first zone can be designed to be higher than the density of the second refractive region 3 in the second zone.

The density can be represented by the total area proportion. In other words, the total area proportion of multiple first refractive region 2 in the first zone is greater than the total area proportion of multiple second refractive region 3 in the second zone. Specifically, the total area of the multiple first refractive region 2 relative to the area of the first zone is greater than the total area of the multiple second refractive region 3 relative to the area of the second zone. In this application, the term "total area proportion" refers to the ratio of the sum of the areas of all micro refractive regions (i.e., first refractive region 2 or second refractive region 3) within a zone to the total area of that zone. In some embodiments, the density can also be represented by the spacing or distance between the refractive regions. In other words, the density of the first refractive region 2 in the first zone can be higher than the density of the second refractive region 3 in the second zone. This means that, on average, the first refractive region 2 are arranged more closely together, with a smaller average spacing between adjacent first refractive region 2 compared to the average spacing between adjacent second refractive region 3. The density of the refractive regions refers to the number of refractive regions per unit area, while the spacing between two refractive regions is the distance between the closest points of those two regions. The average distance between multiple first refractive region 2 refers to the total distance between each one of the first refractive region 2 and its nearest neighboring first refractive region 2 divided by the total number of first refractive region 2. The nearest neighboring first refractive region 2, when arranging multiple first refractive region 2 according to a pattern as described later, refers to the one with the smallest distance within a pattern, and in other cases refers to the one with the smallest distance in each direction. Similar definitions apply to the average spacing between multiple second refractive region 3. In some cases, the size of each refractive region is relatively small, and the differences in size between different refractive regions are not significant (e.g., the maximum value is not more than about 2-3 times the minimum value), allowing the use of density or spacing to describe the density of the first refractive region 2 and the second refractive region 3.

As a result, the multiple first refractive region 2 can form a densely packed region of positive defocus (i.e., increased dioptric power) in the periphery of the center region 5. This application has achieved better myopia control effects by setting high-density myopic defocus zones near the central optical zone (e.g., central portion 5) (corresponding to the more sensitive area of the retina, e.g., the first zone mentioned above). In addition, by reserving appropriate spacing (e.g. setting a lower area ratio) between the second refractive region 3 in areas further away from the central optical zone (e.g. the second zone mentioned above), not only can the compliance of myopic patients be improved, but also the differences in myopia management/control effects between different patients can be minimized to the greatest extent possible, thereby making it more conducive to the management and control of myopia progression.

In some embodiments, the total area proportion of multiple first refractive region 2 within the first zone can be greater than or equal to 60% and less than or equal to 78.5%. Preferably, it is greater than 63% and less than or equal to 78.5%. More preferably, it is greater than 66% and less than or equal to 78.5%.

In some embodiments, the total area proportion of multiple second refractive region 3 within the second zone is less than 60%. Preferably, it is less than 57%. More preferably, it is less than 54%.

Furthermore, the inventors have discovered that dense myopic defocus formed by applying defocus within an annular zone from a 3.0mm inner diameter (e.g., 4.0mm, 5.0mm, 6.0mm, 7.0mm, 8.0mm, 9.0mm, 10.0mm, 11.0mm, or any value in between) to a 28.6mm outer diameter (e.g., 15.0mm, 19.8mm, 24.2mm, or any value in between) centered on the ophthalmic lens can provide more stimulation to the retina, thereby inhibiting axial elongation. In other words, the first zone can include the annular zone formed by the ophthalmic lens' center as the center, or it can essentially consist of or be constituted by this annular zone.

Here's a brief example to illustrate the design of the first refractive region 2: Let's assume the prescription power is -3.5D, the diameter of the lens' center region 5 is 10mm, and the first refractive region 2 are located approximately 5mm from the center. For example, as shown in Figure 1, the first refractive region 2 can be arranged as a ring adjacent to the 10mm diameter center region 5. The number of first refractive region 2 can be calculated as π×d1/d2, where d1 is the diameter of the center region 5, and d2 is the maximum size (e.g., diameter) of the first refractive region 2. When d2 is 1.2mm, the number of first refractive region 2 can be calculated as 26. However, in some embodiments, the number of first refractive region 2 can range from 26 to 35, corresponding to different designs of the maximum size of the first refractive region 2 and the diameter of the center region 5. By densely arranging the first refractive region 2 around the center region 5, the axial elongation can be effectively slowed down, resulting in better myopia control.

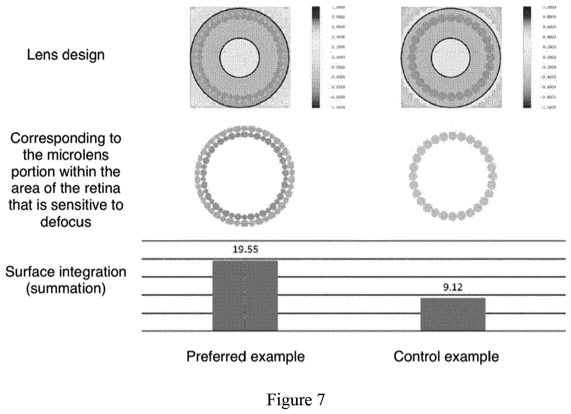

In some embodiments, it is preferable to apply dense defocus within an annular zone from a 9mm inner diameter to a 15mm outer diameter centered on the ophthalmic lens. At this point, the incident light beam passing through the annular zone is roughly projected onto the region adjacent to the fovea centralis at an angle of 10 to 20 degrees. Consistent with this, studies have shown that applying competitive myopic defocus signals near the fovea centralis has a stronger and more consistent effect on slowing axial growth (E. L. Smith III et al., "Eccentricity-dependent effects of simultaneous competing defocus on emmetropization in infant rhesus monkeys," Vision Research, 17(3):32-40, 2020). The experimental results shown in Figure 7 further support this point. Figure 7 illustrates the calculation of the field curvature integral (negative absolute value of field curvature) obtained through optical simulation software, Optic Studio Zemax, when lenses with different micro-lens arrangements are placed on the Liou&Brenna eye model's surface. As shown in Figure 7, the lens of the present invention, by densely applying defocus micro-lenses (i.e., the first refractive region 2) within the corresponding region sensitive to retinal defocus (preferably within an annular zone with an inner diameter of approximately 9.5mm and an outer diameter of approximately 14mm), can provide more defocus stimulation to the retina. In a small-scale experiment, it was found that the ophthalmic lens described in this application effectively promotes choroidal thickening (average choroidal thickening of 6±6% over 2 weeks), which is currently believed to be related to long-term control of axial growth.

Considering the potential vertical movement of the lens during wear, it is beneficial to ensure coverage of the region sensitive to retinal defocus by densely applying refractive regions within an annular area with additional width. In general, multiple first refractive region 2 can be arranged within an annular zone with an inner diameter of 3.0mm to an outer diameter of 28.6mm, including the entire annular zone. For example, multiple first refractive region 2 can be arranged within an annular zone with an inner diameter of 3.0mm to an outer diameter of 24.2mm, including the entire annular zone. Alternatively, multiple first refractive region 2 can be arranged within an annular zone with an inner diameter of 3.0mm to an outer diameter of 19.8mm, including the entire annular zone. In some embodiments, multiple first refractive region 2 are at least arranged within an annular zone with an inner diameter of 9.0mm to an outer diameter of 15.0mm, or in other words, the first zone includes at least the annular zone with an inner diameter of 9.0mm to an outer diameter of 15.0mm. To achieve the effect of dense defocus within this annular zone, it is preferable that the total area proportion of the first refractive region 2 within an individual first pattern (discussed in detail later) within the annular zone with an inner diameter of 9.0mm to an outer diameter of 15.0mm is greater than 70% and less than 78.5%, preferably greater than 72% and less than 78.5%. Additionally, in some embodiments, at least a portion of multiple first refractive region 2 is arranged within an annular zone with an inner diameter of 9.5mm to an outer diameter of 14.0mm centered on the lens center, or at least a portion is arranged within an annular zone with an inner diameter of 11.0mm to an outer diameter of 14.0mm centered on the lens center.

As shown in Figure 1, multiple first refractive region 2 are arranged within a ring-shaped area represented by the first ring 21 (referred to as the first pattern), while multiple second refractive region 3 are arranged within five ring-shaped areas represented by the second rings 31 (referred to as the second pattern). In other words, in Figure 1, the first zone 8 consists of only one first pattern, which is the ring-shaped area represented by the first ring 21, while the second zone 9 includes five second patterns, which are the total ring-shaped areas represented by the five second rings 31.

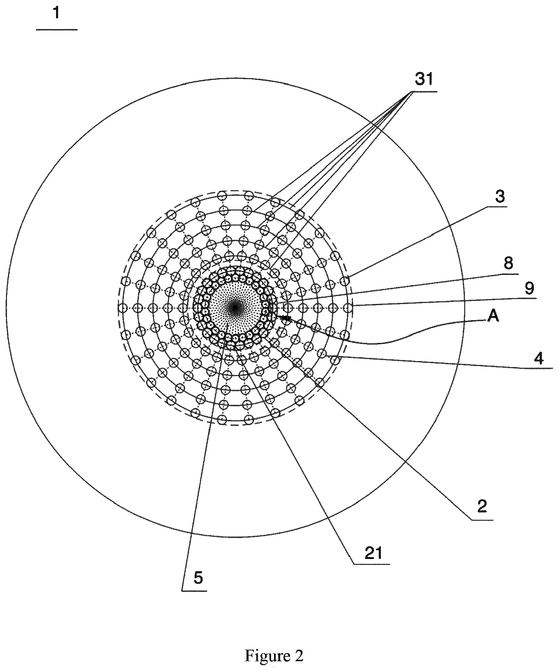

It should be understood by those skilled in the art that, for the sake of simplicity and convenience of illustration, the ring-shaped patterns (such as the first ring 21, the second rings 31, and the subsequent first patterns 2a, 2b) are shown in a simplified form as the center lines of the corresponding annular shapes in each of the figures of this application. For example, in Figure 1, the first ring 21 as a ring-shaped pattern refers to the ring-shaped pattern with the center as the lens center, and the circular line indicated by the numeral 21 in Figure 1 as the centerline, with the inner and outer edges tangent to the first refractive region 2. It can be observed that the centers of the first refractive region 2 are located on the centerline of the first ring 21. Similarly, in Figure 1, the centers of the second refractive region 3 are located on the centerline of the second rings 31. Each second ring 31, as a ring-shaped pattern, refers to the ring-shaped pattern with the lens center as the center, the circular line indicated by the numeral 31 in Figure 1 as the centerline, and the inner and outer edges tangent to the corresponding second refractive region 3 located on the centerline. Thus, in Figure 1, the first zone 8 is defined by the first ring 21, where the inner and outer edges are tangent to the first refractive region 2, while the second zone 9 includes multiple second rings 31 and the intervening areas, which is the annular zone between the inner edge of the closest second ring 31 to the lens center and the outer edge of the farthest second ring 31 from the lens center. Similar limitations apply to the exemplary embodiments of the first and second zones in Figure 2, Figures 4-5, and Figures 8A-8E, which will be described later.

Although Figure 1 shows that the first zone includes 1 first pattern and the second zone includes 5 second patterns, in other embodiments, the first zone and/or the second zone may include more or fewer patterns. In some embodiments, the first zone may include one or more first patterns (e.g., 1, 2, 3, 4, or 5 first patterns), and multiple first refractive regions can be partially or entirely arranged within one or more first patterns. Similarly, the second zone may include one or more second patterns (e.g., 1, 2, 3, 4, 5, 6, 7, or 8 second patterns), and multiple second refractive regions can be partially or entirely arranged within one or more second patterns. In some embodiments, the number of first patterns can range from 1 to 4, and the number of second patterns can range from 1 to 15.

As shown in Figure 1, one or more first patterns can be centered with the center of the ophthalmic lens 1. For simplicity, each first pattern includes the minimum number of first refractive regions necessary to roughly form the pattern. For example, in Figure 1, the first pattern includes only the innermost ring of first refractive regions, which means there is only one ring of first refractive regions in the radial direction without additional rings. Figure 1 shows a total of six ring-shaped patterns, including one first pattern represented by the first ring 21. One or more second patterns can also be centered with the center of the ophthalmic lens 1, and there is no explicit limitation on the maximum size of the second patterns, which can be chosen within an appropriate range by those skilled in the art. Similar to the first pattern, each second pattern includes the minimum number of second refractive regions necessary to roughly form the pattern. For example, in Figure 1, each second pattern includes only one ring of second refractive regions in the radial direction without additional rings. Therefore, Figure 1 has five second patterns represented by the five second rings 31.

Figure 2 illustrates a variant example of the ophthalmic lens shown in Figure 1, where the first zone includes two first patterns instead of one.

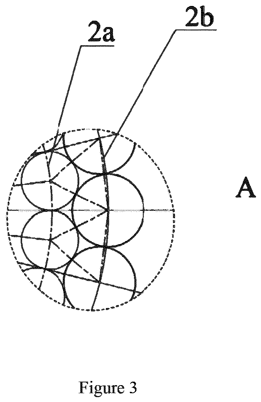

Specifically, Figure 2 shows multiple first refractive region 2 arranged on two first patterns. Referring to the partial view in Figure 3, the first refractive region 2 can be arranged on the inner first pattern 2a (referred to as the innermost first pattern 2a for convenience) near the central portion 5 and the outer first pattern 2b (referred to as the outermost first pattern 2a for convenience) adjacent to the inner first pattern 2a and farther from the central portion 5. The first refractive regions within the inner first pattern 2a can be contiguous or close to each other. Close proximity means that these first refractive regions have a smaller spacing between them, such as smaller than the spacing between the second refractive region 3. The first refractive regions within the outer first pattern 2b can also be contiguous or close to each other. To enhance the effect of dense defocus in the first refractive region 2, the first refractive regions within the inner first pattern 2a and the outer first pattern 2b can be contiguous both within and between the patterns. In this case, the diameter of the first refractive regions within the inner first pattern 2a can be slightly smaller than those within the outer first pattern 2b, so that the number of first refractive regions within the inner first pattern 2a and the outer first pattern 2b can be roughly the same. In this situation, if both the inner first pattern 2a and the outer first pattern 2b are considered as ring-shaped patterns centered on the circles indicated by 2a and 2b in the figure, they may even overlap to some extent. Of course, in other embodiments, the first refractive regions within the inner first pattern 2a and the outer first pattern 2b can also have the same diameter, and in that case, the number of first refractive regions within the inner first pattern 2a can be fewer than those within the outer first pattern 2b. Although Figures 2 and 3 describe an example where the first refractive region 2 are arranged in the aforementioned two first patterns, it is understood that the first refractive region 2 can also be arranged in more than two first patterns, which may or may not overlap but have certain spacing or adjacency.

In the embodiments shown in Figures 1 and 2, each first pattern and second pattern are centered with the center of the ophthalmic lens. However, in other embodiments, the first pattern and/or second pattern may not be centered with the center of the ophthalmic lens, or they may have different shapes, such as fan-shaped, crescent-shaped, polygonal, or other shapes that are rotationally symmetric with respect to the center of the lens. Additionally, when multiple first patterns and multiple second patterns are present, these patterns can be identical or different from each other. In these cases, the first zone and second zone may also have shapes corresponding to the shapes and arrangements of the first patterns and second patterns, respectively. For example, the first zone or second zone can be the smallest region formed by including all the first patterns or second patterns, respectively. A class ring refers to a configuration where most of the first refractive region 2 are arranged on one or more circles, while the remaining first refractive region 2 are located outside the circles, either on the inner side of the circle in a regular pattern (e.g., equidistantly) or on the outer side of the circle in a regular pattern (e.g., equidistantly). For example, multiple first refractive region 2 can be arranged in a shape resembling the outline of a sunflower.

In some embodiments, the first refractive region 2 and second refractive region 3 may not be uniformly distributed around the entire circumference of the central portion 5, as shown in Figures 1 and 2. Instead, they can be distributed on one side of the central portion 5, such as the upper, lower, left, or right side, or they can be distributed around the periphery of the central portion 5. They can be symmetric or asymmetric with respect to the central portion 5. The specific distribution can be adjusted based on the visual needs of the wearer. In some examples, the first patterns and/or second patterns, as well as the corresponding first zone and/or second zone, can have a fan-shaped configuration, as shown in Figure 4. In Figure 4, the region labeled as B may not contain any second refractive region 3, and in some other embodiments, it may not contain any first refractive regions either. In some embodiments, region B can be used to allow the wearer to switch between distance vision (e.g., viewing a blackboard) and near vision (e.g., reading a book on a desk) without the need for significant head movement. Therefore, different defocus powers, distinct from the prescription power, can be optionally assigned to this region. In this case, the second zone can be a ring-shaped region that is tangent to the inner edge of the second ring 31 closest to the center of the lens and the outer edge of the second ring 31 farthest from the center of the lens, subtracting the region B. Each second pattern in this case also has a fan-shaped configuration.

As mentioned earlier, in Figure 1, the first refractive region 2 are arranged within one first ring 21 (first pattern), and the second refractive region 3 are arranged within five second rings 31 (second pattern). The spacing between adjacent rings (patterns) is equal. Here is a specific numerical example based on Figure 1 to illustrate: the maximum diameter of the second ring 31 can be 30mm (radius of 15mm), the diameter of the central portion 5 is 10mm (radius of 5mm), and both the first refractive region 2 and the second refractive region 3 have a diameter of 1.2mm. The spacing between adjacent rings can be approximately (15-5-0.6)/5-1.2≈0.7mm, which is the approximate distance between adjacent refractive regions along the radial direction.

In this context, the term "spacing between patterns" (referred to as pattern spacing) can refer to the distance between refractive regions within a pattern and an adjacent pattern along the radial direction of the lens or the distance between the innermost radial point of the outer pattern and the outermost radial point of the inner pattern along the radial direction of the lens. When the refractive regions on different patterns, as shown in Figure 1, are distributed radially, the pattern spacing can be determined by the distance between adjacent refractive regions along the radial direction. When the refractive regions on different patterns are not radially distributed, the pattern spacing can be defined as half of the difference between the diameter of the innermost contour of the outer pattern and the diameter of the outermost contour of the inner pattern in a predetermined radial direction.

In some embodiments, the spacing between adjacent rings or patterns may not all be equal but can be partially equal or entirely different. For example, the spacing between any two adjacent second patterns can be equal to the spacing between the adjacent first and second patterns, and/or equal to the spacing between any two adjacent first patterns (if there are two first patterns).

In some embodiments, the spacing between adjacent patterns (including first patterns and second patterns) can be equal to 0.2 to 1.5 times the diameter of the first refractive region 2 or the second refractive region 3. For example, the spacing can be 0.2, 0.3, 0.4, 0.5, 0.6, 0.7, 0.8, 0.9, 1.0, 1.1, 1.2, 1.3, 1.4, or 1.5 times the diameter.

In some embodiments, when there are multiple first patterns (e.g., first rings 21), the spacing between adjacent first patterns can be adjacent, close, or slightly larger. In some embodiments, the spacing between any two adjacent first patterns can be smaller than or equal to 0.5mm. Additionally, the spacing between adjacent patterns (including first patterns and second patterns) can gradually increase in the direction away from the central portion 5. In other embodiments, the first patterns can have equal first spacing, while the second patterns can have equal or unequal second spacing, where the first spacing can be smaller than the second spacing.

In some embodiments, when there are multiple second patterns (e.g., second rings 31), the spacing between adjacent second patterns can be equal. Alternatively, the pattern spacing can increase as it gets closer to the outer edge.

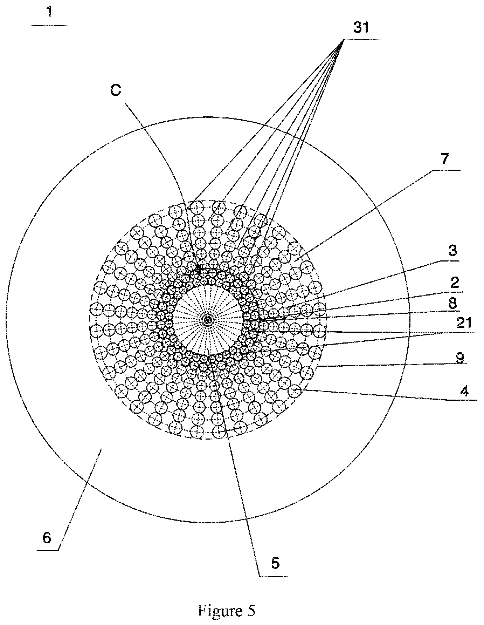

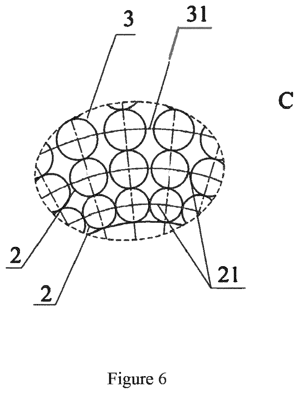

In some embodiments, the spacing between any two adjacent first patterns (if present), any two adjacent second patterns (if present), and/or between adjacent first and second patterns can be zero. For adjacent patterns with zero spacing, it can be considered as continuous or adjacent. As shown in Figure 5 and its zoomed-in view (Figure 6), the first zone 8 includes two first rings 21 (first patterns), and the second zone 9 includes six second rings 31 (second patterns). Each adjacent ring (whether it is a first ring 21 or a second ring 31) can be adjacent or close to each other. In this case, it becomes less clear which rings are the first rings and which are the second rings. However, it is still evident that the spacing between the outer refractive regions is significantly larger than the spacing between the inner refractive regions. For clarity, patterns with adjacent refractive regions having a spacing smaller than 0.5mm within the same pattern can be referred to as "first patterns," while patterns with larger spacing between the refractive regions can be referred to as "second patterns." In one embodiment, because there is little or no gap (or a small gap smaller than 0.5mm) between the refractive regions on the innermost pattern and the adjacent pattern, the number of first rings 21 is two, and the number of second rings 31 is six. The spacing between the first rings 21 is zero, the spacing between the second rings 31 is zero, and the spacing between the first rings 21 and the second rings 31 is also zero. Furthermore, as shown in Figure 5, as the rings move toward the outer edge, the size of the first refractive region 2 or second refractive region 3 within the first rings 21 or second rings 31 increases, and the spacing between adjacent first refractive region 2 or second refractive region 3 within the first rings 21 or second rings 31 also increases.

Although Figure 1 illustrates that the adjacent first refractive region 2 within the first pattern are continuous (arranged without gaps), in some embodiments, there can be small gaps between adjacent first refractive region 2 within at least one first pattern. In other words, in some embodiments, in the direction along the extension of the first pattern, adjacent first refractive region 2 can have small gaps between them (e.g., gaps smaller than 0.5mm, such as 0.4mm, 0.3mm, 0.2mm, or 0.1mm). However, the spacing between the first refractive region 2 (e.g., average spacing) can be smaller than the spacing between the second refractive region 3 (e.g., average spacing). For example, the spacing between the first refractive region 2 along the extension of the first pattern (e.g., average spacing) can be smaller than the spacing between the second refractive region 3 along the extension of the second pattern (e.g., average spacing). However, in certain directions (e.g., radial direction), the spacing between the first refractive region 2 (e.g., average spacing) can be smaller than, equal to, or even larger than the spacing between the second refractive region 3 (e.g., average spacing) in the same direction.

In some embodiments, multiple second refractive region 3 can be arranged as separate island-like regions with spacing between them within one or more second patterns. In some embodiments, within at least one second pattern, the spacing between the second refractive region 3 is greater than the maximum spacing between the first refractive region 2. The inventors have found that preserving adequate spacing between the second refractive region 3 can improve wearer compliance and visual comfort, while minimizing the variability in myopia management/control effects among different patients. It is believed, without being limited to any theory, that if the range of myopia defocus is too large and the focused light on the retina is insufficient, it may be difficult for the eyes to determine whether to adjust the retina forward or backward to find the focal point, resulting in significant differences in effectiveness among different patients. Therefore, it is important to maintain sufficient spacing between the second refractive region 3.

In some embodiments, the second refractive region 3 in each second pattern can be set with the same spacing. For example, the spacing between the second refractive region 3 in different second patterns can be equal, resulting in more second refractive region 3 closer to the outer edge or larger in size.

From a holistic perspective, including both the first and second patterns, the spacing between adjacent refractive regions within a pattern increases as the pattern moves farther away from the center of the ophthalmic lens. This is illustrated in Figures 1, 4, and 5. In other words, within any two adjacent patterns, the spacing between refractive regions within the pattern closer to the center of the ophthalmic lens is smaller than the spacing between refractive regions within the pattern farther from the center. Of course, this rule can also be applied exclusively to the second patterns. Specifically, when multiple first patterns are present, to ensure dense addition of light in the corresponding myopia-sensitive areas of the retina, the first refractive region 2 within each first pattern can be adjacent or close to each other, as shown in Figure 2. In this case, the spacing between the second refractive regions within the second patterns farther from the center can be larger. In an exemplary embodiment, from the innermost pattern to the outermost pattern, the spacing between adjacent refractive regions within a single pattern increases gradually but does not exceed 2.00mm, preferably does not exceed 1.90mm, and more preferably does not exceed 1.80mm, such as gradually increasing to 1.20mm.

Although in the illustrated embodiments, the first refractive region 2 are shown to be uniformly arranged along the extension of the first pattern, in other embodiments not shown, the first refractive region 2 along the extension of the first pattern can be non-uniformly arranged. The extension direction of the first pattern refers to the direction in which the first pattern is formed by the line. For example, in Figures 1, 2, and 5, where the first pattern is formed as a circular ring 21, the extension direction of the first pattern can be understood as the direction in which the lines forming the circular ring extend, i.e., the circumferential direction. In other embodiments, for a first pattern, in addition to the uniformly arranged first refractive regions, it can also include non-uniformly arranged first refractive regions. The non-uniformly arranged first refractive regions are discretely distributed along the extension direction of the first pattern with larger spacing between them, but they are adjacent or close to the first refractive region 2 arranged in a continuous manner along the extension direction of the first pattern.

Although in the illustrated embodiments, the second refractive region 3 are shown to be uniformly arranged along the extension direction of the second pattern, in other embodiments not shown, the second refractive region 3 along the extension direction of the second pattern can be non-uniformly arranged. The extension direction of the second pattern refers to the direction in which the second pattern is formed by the line. For example, in Figures 1, 2, and 5, where the second pattern is formed as a circular ring 31, the extension direction of the second pattern can be understood as the direction in which the lines forming the circular ring extend, i.e., the circumferential direction. In other embodiments, for a second pattern, in addition to the uniformly arranged second refractive regions, it can also include non-uniformly arranged second refractive regions. The non-uniformly arranged second refractive regions are discretely distributed along the extension direction of the second pattern with larger spacing between them, but they are adjacent or close to the second refractive region 3 arranged along the extension direction of the second pattern. Optionally, adjacent second patterns may not be adjacent (not like in Figure 5) but have slightly larger spacing (as shown in Figures 1 and 2).

The design of the spacing between refractive regions within each pattern has been discussed above, and now the design of the overall area ratio within each pattern will be discussed. For example, preferably, within at least one first pattern or each first pattern, the total area ratio of the first refractive region 2 can be set to be greater than or equal to 60% and less than or equal to 78.5%. Preferably, within at least one first pattern, the total area ratio of the first refractive region 2 can be set to be greater than or equal to 70% and less than or equal to 78.5%. Preferably, within at least two first patterns, the total area ratio of the first refractive region 2 can be set to be greater than or equal to 70% and less than or equal to 78.5%. In some embodiments, within at least one second pattern or each second pattern, the total area ratio of the second refractive region 3 can be set to be less than 60% and greater than or equal to 30%, preferably less than 60% and greater than or equal to 35%, and more preferably less than 60% and greater than or equal to 40%. Preferably, in the case of multiple second patterns within the second zone, the total area ratio of the second refractive region 3 can be set to be less than 60% and greater than or equal to 30%.

In some embodiments, the total area ratio of the first refractive regions within each first pattern is larger than the total area ratio of the second refractive regions within each second pattern. In the case of multiple patterns, the total area ratio of the refractive regions contained within each pattern can gradually decrease in the direction away from the center of the lens. For example, in the case of multiple first patterns within the first zone, the total area ratio of the first refractive regions in the first pattern closer to the center of the ophthalmic lens is greater than the total area ratio of the first refractive regions in the first pattern farther from the center. Similarly, in the case of multiple second patterns within the second zone, the total area ratio of the second refractive regions in the second pattern closer to the center of the ophthalmic lens is greater than the total area ratio of the second refractive regions in the second pattern farther from the center.

In addition, for example, in some embodiments, the lens can be divided into multiple sectorial zones, such as 2 to 36 sectorial zones, for example, 2 to 18, 2 to 4, 3, 4, 5, 6, 7, 8, 9, 10, 11, 12, 13, 14, 15, 16, 17, or 18 sectorial zones. The first refractive region 2 can be independently set in each of these sectorial zones, and the second refractive region 3 can be independently set in each of these sectorial zones. For example, the previously discussed first patterns, second patterns, first zone, and second zone can be divided into multiple parts that fall within these sectorial zones, and the ways of setting the first refractive region 2 and the second refractive region 3 in each part can be discussed. In other words, the setting of the first refractive region 2 in different sectorial zones can be the same or different, and the setting of the second refractive region 3 in different sectorial zones can be the same or different. For example, in some embodiments, the setting (such as shape, size, density, spacing, area ratio, and defocus power) of the first refractive region 2 and/or the second refractive region 3 in at least one of the sectorial zones is different from the setting in other sectorial zones. In some embodiments, the first refractive region 2 and/or the second refractive region 3 can be set in at least one sectorial zone according to any one of the examples shown in Figures 1-6 and 8A-8E, or the first refractive region 2 and/or the second refractive region 3 can be set in at least some sectorial zones using multiple examples shown in Figures 1-6 and 8A-8E. In some embodiments, in, for example, at least 20% to 60% (such as 20%, 30%, 40%, 50%, 60%) of the sectorial zones, the total area ratio of multiple first refractive region 2 in the first zone (or at least one first pattern) is greater than or equal to 60% and less than or equal to 78.5%, preferably greater than 63% and less than or equal to 78.5%, more preferably greater than 66% and less than or equal to 78.5%, and further preferably greater than or equal to 70% and less than or equal to 78.5%, while the total area ratio of multiple second refractive region 3 in the second zone is less than 60%, preferably less than 57%, more preferably less than 54%, and the total area ratio of multiple second refractive region 3 in at least one second pattern contained in the second zone is less than 60% and greater than or equal to 30%, preferably less than 60% and greater than or equal to 35%, and more preferably less than 60% and greater than or equal to 40%. Furthermore, in some embodiments of the first zone including one or more first patterns and at least a portion of the first zone is a first annular zone centered on the center of the ophthalmic lens, with an inner diameter of 9mm and an outer diameter of 15mm, at least 20%-60% (e.g. 20%, 30%, 40%, 50%, or 60%) of the sectorial zones in the multiple fan-shaped areas have a total area ratio of the first refractive regions within any single first pattern in the first annular zone that is greater than 70% and less than 78.5%, preferably greater than 72% and less than 78.5%.

Furthermore, as shown in Figure 1, in addition to describing the arrangement of multiple first refractive region 2 and multiple second refractive region 3 using first patterns and second patterns, another approach is to describe their arrangement using rays. In other words, as shown in Figure 1, multiple first refractive region 2 and multiple second refractive region 3 are distributed along multiple rays 4 that originate from the center of the ophthalmic lens (i.e., the centers of these refractive regions are located on the rays 4). The distribution in a ray-like pattern is designed to provide clear vision in a ray-like region in the vertical and horizontal directions, taking into account the user's need for clear vision in different directions, especially when the pattern spacing is small.

In some embodiments, both the first refractive region 2 and the second refractive region 3 are distributed along each ray 4. In embodiments where the projected shape of the first refractive region 2 and the second refractive region 3 on the ophthalmic lens is not circular, it can be said that the centers of the first refractive region 2 and the second refractive region 3 (i.e., the centers of the projected shapes on the ophthalmic lens) are located on the rays 4. On each ray 4, the number of first refractive regions can be less than, equal to, or greater than the number of second refractive regions. For example, when the number of rays 4 is 2n, these rays 4 form n straight lines. Of course, in other embodiments not shown, portions of multiple first refractive region 2 and multiple second refractive region 3 may also not be distributed on a ray, for example, some refractive regions on a ring can be interleaved relative to adjacent refractive regions on another ring. When multiple first refractive region 2 and multiple second refractive region 3 are distributed along the rays 4, the number of refractive regions on each ring is the same. In this case, a radially continuous blank region, i.e., a radially continuous region for far vision correction, will be formed outside the central optical zone, which helps provide good visual quality. Optionally, the number of refractive regions on the rings closer to the central portion 5 can be fewer, while the number of refractive regions on the rings farther away from the central portion 5 can be greater. In some embodiments, adjacent first refractive regions and/or adjacent second refractive regions on the same ray can be in contact with each other, as shown in Figure 5.

In questionnaire surveys focusing on patient comfort, it was found that the ophthalmic lenses described in this application (e.g., lenses with a structure that forms a radially continuous region for far vision correction outside the central optical zone) received higher scores after long-term wear (Table 1). The questionnaire includes ratings for comfort during wear, presence of double vision, feelings of fatigue, dizziness, headache, or difficulty in adaptation, ease of adaptation to new lenses, walking difficulties while wearing the lenses, and ability to navigate stairs (each item scored out of 10, with the average score indicating overall comfort, with higher scores indicating greater comfort). This is in comparison to ophthalmic lens 1 that does not have a radially continuous region for far vision correction.

**Table 1:**

| Duration of wearing ophthalmic lenses | 3 days | 2 weeks |
|---|---|---|
| Comfort rating by the wearer of the ophthalmic lenses applied for in this application | 9.22 | 9.88 |
| Comparison of the comfort rating by the wearer of ophthalmic lenses 1 | 9.21 | 9.38 |

Optionally, in some embodiments, along the direction away from the central portion 5, both the first refractive region 2 and the second refractive region 3 along each ray can have gradually or stepwise increasing sizes and gradually or stepwise decreasing defocus power. As mentioned earlier, this arrangement, combined with the radially continuous region for far vision correction, maintains a relatively constant low-intensity "image jump" throughout the lens range through optical optimization, resulting in good visual effects, easy adaptation for subjects, and high compliance, given that other parameters remain unchanged. In some embodiments, the coefficient of variation of the image jump for multiple second refractive regions within the entire second zone can be less than 15%, preferably less than 12%, and more preferably less than 10%. Additionally, in some embodiments, to ensure myopia control efficacy in the peripheral regions with the second refractive regions, the coefficient of variation of the image jump for multiple second refractive regions within the entire second zone can be greater than 1%, preferably greater than 2%, and more preferably greater than 3%. In some embodiments, a range for the coefficient of variation of the image jump for multiple second refractive regions can be determined by arbitrarily combining the upper and lower limits mentioned above.

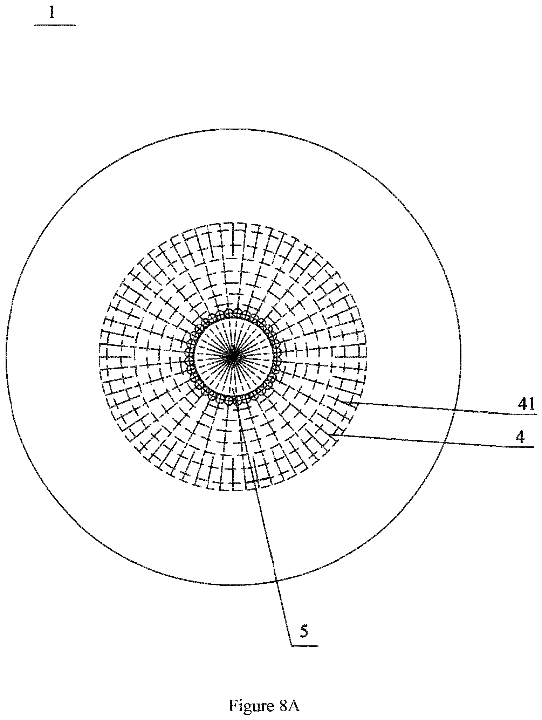

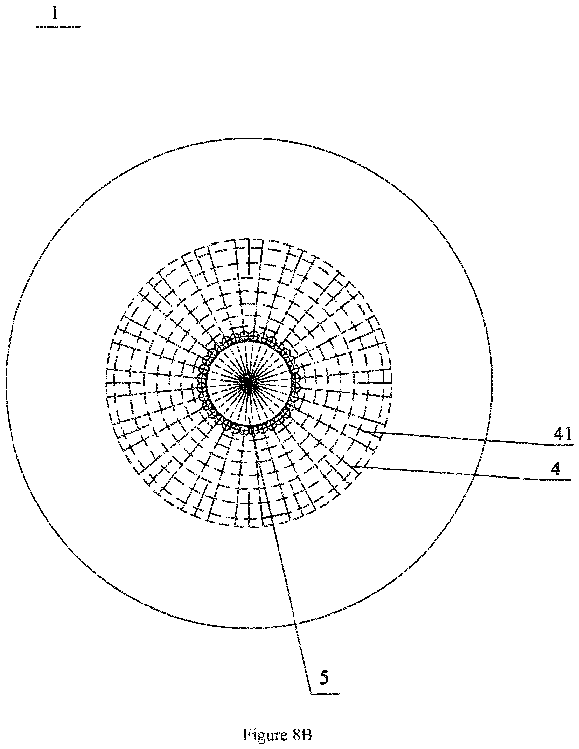

For clarity, additional second refractive regions can also be distributed between adjacent rays 4, and these additional second refractive regions can be arranged in regular patterns. For descriptive purposes, the pattern formed by these additional second refractive regions is referred to as an additional pattern 41, as shown in Figure 8A. Optionally, an additional pattern 41 can be set between every two adjacent rays 4. Alternatively, an additional pattern 41 can be set between some pairs of adjacent rays 4, while no pattern is set between other pairs of adjacent rays (resulting in a blank space). In this case, the additional patterns 41 and blank spaces can alternate, as shown in Figure 8B. Overall, all the additional patterns 41 can radiate from the central portion 5. Each additional pattern 41 can be linear, as shown in the figure, or have any other curved shape.

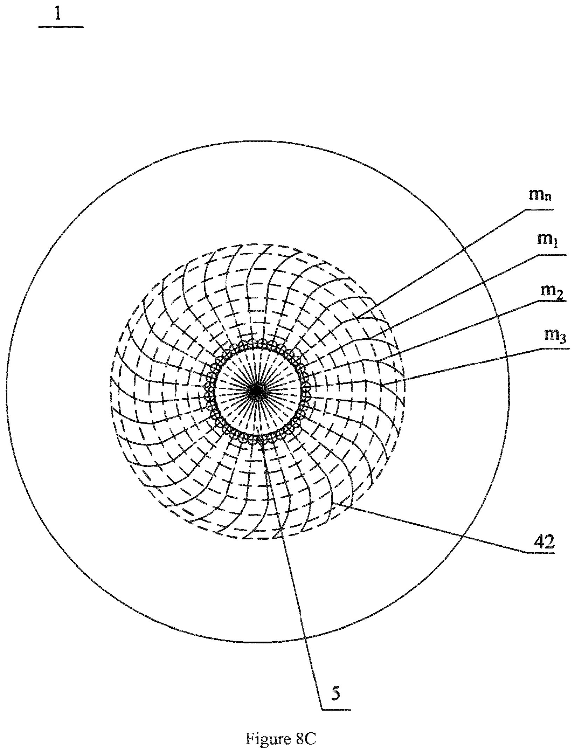

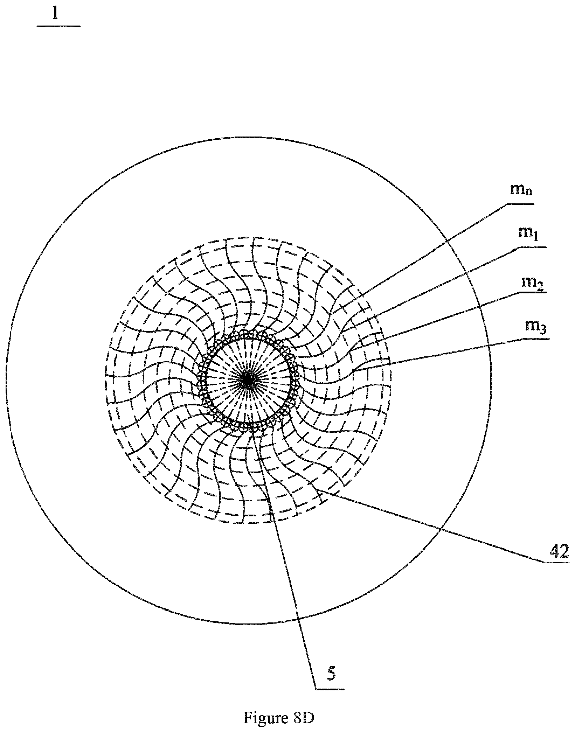

For example, instead of multiple rays 4, multiple first refractive regions and second refractive regions can be distributed along multiple curves 42, as shown in Figures 8C-8D. In some embodiments, the centers of the first refractive region 2 and second refractive region 3 (such as the centers of their projections on the ophthalmic lens) can be located on the curves 42. These curves 42 can radiate from the central portion 5. This means that the distance between the two intersection points m₁ and m₂ on adjacent curves 42, which intersect with the circle centered at the ophthalmic lens's center (as shown by the dashed line in the figure), increases gradually as the diameter of this intersecting circle increases. For the same intersecting circle, it can intersect with all the curves 42, and the distance between any two adjacent curves 42 and the intersection points with the intersecting circle can be equal. Multiple curves 42 can bend in the same direction, such as counterclockwise (as shown in Figure 8C), or in other embodiments not shown, they can bend clockwise. Of course, each curve 42 can also have multiple bending directions, as shown in Figure 8D, which illustrates a waveform with two bends on each curve 42. In other embodiments not shown, each curve 42 can have more bends. Furthermore, these bends can be uniformly distributed along each curve 42 or unevenly distributed. For example, the bends can be fewer in the portion closer to the central portion 5 and more in the portion farther from the central portion 5. In some embodiments, adjacent first refractive regions and/or adjacent second refractive regions on the same curve can be connected to each other.

Furthermore, in other embodiments not shown, the first refractive region 2 can be arranged on the first portion of multiple rays or curves (such as the rays or curves shown in the previous figures or similar ones) starting from the center of the ophthalmic lens, while the second refractive region 3 can be arranged on the second zone, and the rays or curves of the first portion can partially overlap or not overlap with those of the second zone. As an example, each second refractive region 3 within each second pattern shown in Figure 1, Figure 2, Figure 4, or Figure 5 can be moved a certain distance (or rotated a certain angle around the lens's center) in the circumferential direction, so that the first refractive region 2 and the second refractive region 3 are distributed in two sets of rays (in this case, the number of rays is doubled) starting from the ophthalmic lens's center.

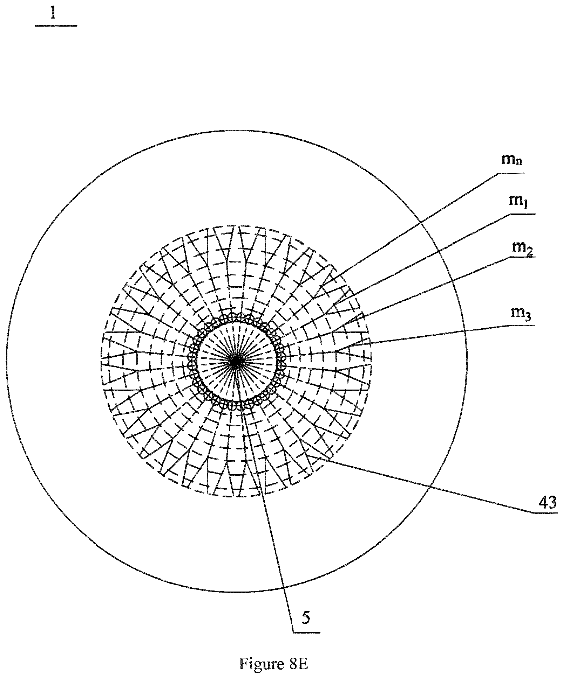

Whether it's rays 41 or curves 42, they are formed by individual lines. Optionally, instead of rays 41 or curves 42, multiple first refractive regions and second refractive regions can be distributed on composite lines 43, as shown in Figure 8E. In some embodiments, the centers of the first refractive region 2 and second refractive region 3 (such as the centers of their projections on the ophthalmic lens) can be located on the composite lines 43. Multiple composite lines 43 can radiate from the central portion 5. Composite lines 43 can be formed by multiple straight lines, multiple curves, or a combination of straight lines and curves. In the illustrated embodiment, the composite lines 43 can include a main line extending radially from the ophthalmic lens and two branch lines extending outward from the ends of the main line, away from the ophthalmic lens's center. Multiple composite lines 43 can also be arranged repetitively in the circumferential direction of the ophthalmic lens. In other words, the distances between the intersection points m₁, m₂, ..., mₙ on the composite lines 43 and the circle centered at the ophthalmic lens's center (as shown by the dashed line in the figure) are equal.

In some embodiments, as previously described, the first and second refractive regions can be evenly distributed along each ray or curve, and/or the multiple rays or curves can be evenly distributed on the ophthalmic lens. In some embodiments, along the same ray or curve, the first refractive regions can have uniform addition power, and/or the second refractive regions can have uniform addition power, and/or the first refractive regions and second refractive regions can have uniform addition power. Alternatively, along the same ray or curve, the first refractive regions can have uniform size, and/or the second refractive regions can have uniform size, and/or the first refractive regions and second refractive regions can have uniform size. Alternatively, along the same ray or curve, the direction of change in addition power of the first refractive regions can be opposite to the direction of change in size, and/or the direction of change in addition power of the second refractive regions can be opposite to the direction of change in size. Alternatively, along the same ray or curve, the size of the first and second refractive regions can gradually increase in the direction away from the center of the ophthalmic lens, and/or along the same ray or curve, the addition power of the first and second refractive regions can decrease in a stepwise manner. In some embodiments, the number of rays or curves can range from 16 to 40, and preferably from 26 to 35.

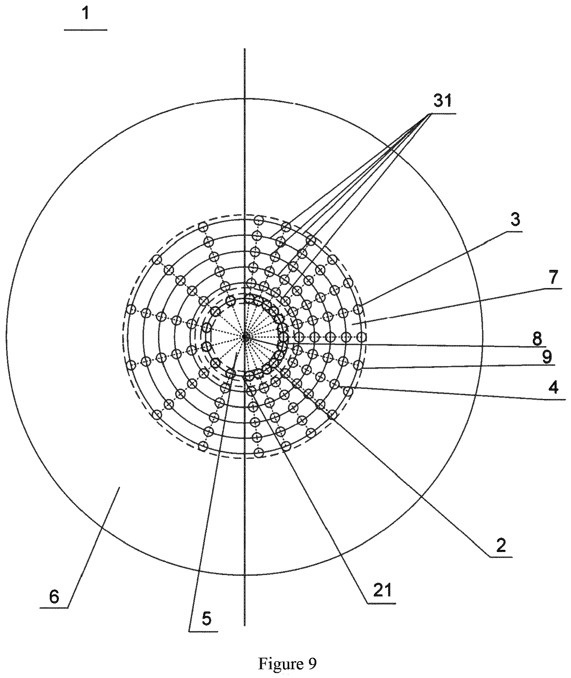

Furthermore, in some exemplary embodiments, the first refractive region 2 and the second refractive region 3 can be asymmetrically arranged on the nasal and temporal sides of the lens, for example, as shown in Figure 9. It should be understood that in this application, "nasal side" and "temporal side" refer to the left and right sides divided by a vertical line passing through the center of the lens (such as the vertical dashed line shown in Figure 9), with the side closer to the nose being the "nasal side" and the side away from the nose being the "temporal side." The nasal and temporal sides of the human eye are not symmetric, and numerous studies have measured off-axis aberrations of the human eye, mostly in the horizontal visual field. These studies have found that defocus and astigmatism vary with increasing horizontal field of view (Atchison DA. "Recent advances in measurement of monochromatic aberrations of human eyes." Clin Exp Optom. 2005 Jan;88(1):5-27)*.* Due to the asymmetry of the human eye, the defocus in different directions in the horizontal field of view is not the same on the nasal side and temporal side. Therefore, in some embodiments, the shape, size, density, spacing, area ratio, and/or addition power of the first refractive region 2 and/or the second refractive region 3 can be asymmetrically arranged on the nasal and temporal sides within the first zone (or each first pattern) and/or the second zone (or each second pattern). For example, as shown in Figure 9, the number of the first refractive region 2 and the second refractive region 3 on the nasal (left) and temporal (right) sides can be asymmetrically arranged, such that the total area ratio of the first refractive region 2 on the temporal side (e.g. within the first pattern 21 of the first zone) is greater than that on the nasal side, and the total area ratio of the second refractive region 3 on the temporal side (e.g. within each second pattern 31 of the second zone) is greater than that on the nasal side. Additionally, the shape, size, density, spacing, area ratio, and/or addition power of the first refractive region 2 and/or the second refractive region 3 on the nasal side and temporal side can be determined based on the distribution of dioptric power of the eyeball (such as the refractive state of the peripheral retina on the nasal and temporal sides) and/or the eye's axial length profile (measured, for example, using instruments such as the Shin Nippon Auto Ref/Keratometer, multi-spectral refractive topography instruments, IOLMaster, LensStar, ultrasound, or magnetic resonance imaging). The inventor of this application believes that, by asymmetrically setting the nasal and temporal refractive regions, the asymmetry of the human eye can be compensated, allowing the wearer to obtain sufficient myopic defocus in different directions, thus better managing and controlling myopia progression.

Preferably, the density or total area ratio of the first refractive regions on the temporal side of the first zone or the first pattern is different from that on the nasal side. Preferably, the addition power of the first refractive regions is asymmetrically arranged on the temporal and nasal sides within the first zone or a single first pattern. For example, the addition power of two first refractive regions that are basically symmetrical with respect to a vertical line passing through the center of the lens is different. Alternatively, the addition power of the first refractive regions on the temporal and nasal sides within the first zone or each first pattern respectively may be a uniform value, but the uniform value on the two sides is different. Alternatively, the change pattern (trend and/or value, etc.) of the addition power of the first refractive regions on the temporal side within the first zone or each first pattern along the radial or circumferential direction of the lens is different from that on the nasal side. Similarly, the density or total area ratio of the second refractive regions on the temporal side of the second zone or the second pattern is preferably different from that on the nasal side. Preferably, the addition power of the second refractive regions is asymmetrically arranged on the temporal and nasal sides within the second zone or a single second pattern. For example, the addition power of two second refractive regions that are basically symmetrical with respect to a vertical line passing through the center of the lens is different. Alternatively, the addition power of the second refractive regions on the temporal and nasal sides within the second zone or each second pattern respectively may be a uniform value, but the uniform value on the two sides is different. Alternatively, the change pattern (trend and/or value, etc.) of the addition power of the second refractive regions on the temporal side within the second zone or each second pattern along the radial or circumferential direction of the lens is different from that on the nasal side.

In some cases, there is a tendency for hyperopic defocus to occur more easily on the nasal side. Therefore, increasing the addition power, density, and/or area proportion of the first refractive region 2 and/or the second refractive region 3 on the temporal side can balance the myopic defocus levels on both sides. Thus, the density or total area proportion of the first refractive regions set on the temporal side of the first zone or at least one first pattern is greater than that set on the nasal side of the first zone or at least one first pattern. Similarly, the average addition power of the first refractive regions set on the temporal side of the first zone or each first pattern is greater than that set on the nasal side of the first zone or each first pattern. For example, between the two first refractive regions that are generally symmetric with respect to the vertical line passing through the center of the lens, the first refractive regions on the temporal side have a higher addition power than the first refractive regions on the nasal side. Alternatively, the addition power of the first refractive regions on the temporal side and nasal side of the first zone or each first pattern can be set to a uniform value, but the value on the temporal side is greater than that on the nasal side. Similarly, the density or total area proportion of the second refractive regions set on the temporal side of the second zone or at least one second pattern is greater than that set on the nasal side of the second zone or at least one second pattern. Additionally, the average addition power of the second refractive regions set on the temporal side of the second zone or each second pattern is greater than that set on the nasal side of the second zone or each second pattern. For example, between the two second refractive regions that are generally symmetric with respect to the vertical line passing through the center of the lens, the second refractive regions on the temporal side have a higher addition power than the second refractive regions on the nasal side. Alternatively, the addition power of the second refractive regions on the temporal side and nasal side of the second zone or each second pattern can be set to a uniform value, but the value on the temporal side is greater than that on the nasal side.

Furthermore, according to some exemplary embodiments of the present application, the number of first refractive region 2 in each first pattern (e.g., the first ring 21) and the number of second refractive region 3 in each second pattern (e.g., the second ring 31) can be the same, as shown in Figures 1, 2, 5, 8C-8D, and 9. Preferably, the total number of first refractive region 2 and second refractive region 3 arranged on the entire ophthalmic lens can range from 170 to 400, more preferably from 190 to 300.

In accordance with another aspect of the present application, a spectacle frame is provided, on which various ophthalmic lenses according to the embodiments of the present invention can be mounted. Such a spectacle frame can not only suppress the development of refractive errors in the wearer's eyes but also provide clear vision.

It should be noted that the terms used herein are for the purpose of describing specific embodiments and are not intended to limit the scope of the present application. Wherever used, unless otherwise explicitly indicated, the singular forms also include the plural forms, and it should be understood that the terms "comprise" and/or "comprising" are inclusive of indicating the presence of features, steps, operations, components, and/or combinations thereof.

It should be noted that the terms "first," "second," etc. used in this application's specification, claims, and the accompanying drawings are used to distinguish similar objects and are not necessarily used to describe a particular order or sequence. It should be understood that the data used in this way can be interchangeable in appropriate circumstances so that the embodiments of the present application described here can be implemented in an order other than that illustrated or described here.

The above embodiments have been described to illustrate the present application, but it should be understood that these embodiments are provided for illustrative purposes only and not intended to limit the scope of the present application. In addition, those skilled in the art will understand that the present application is not limited to the above embodiments, and various modifications and variations can be made based on the teachings of the present application, which are within the scope of protection of the present application. The scope of protection of the present application is defined by the appended claims and their equivalents.

## Claims

1. An ophthalmic lens comprising a central portion, multiple first refractive regions, and multiple second refractive regions, wherein:
the multiple first refractive regions are arranged in a first zone surrounding the central portion,
the multiple second refractive regions are arranged in a second zone farther away from the central portion than the first zone,
part or whole of the central portion has prescription power based on a human eye prescription,
the multiple first refractive regions and the multiple second refractive regions have different dioptric powers from the prescription power, and
the ratio of the total area of the multiple first refractive regions to the area of the first zone is greater than the ratio of the total area of the multiple second refractive regions to the area of the second zone.

2. The ophthalmic lens according to claim 1, wherein:
the density of the multiple first refractive regions in the first zone is greater than the density of the multiple second refractive regions in the second zone, and/or
the average spacing between the multiple first refractive regions is smaller than the average spacing between the multiple second refractive regions.

3. The ophthalmic lens according to claim 1 or 2, wherein the multiple first refractive regions are configured such that, when the ophthalmic lens is worn by a wearer, a part or all of the incoming light beams passing through the multiple first refractive regions refractive region are projected onto an area between 10 to 20 degrees from the fovea of the wearer's retina.

4. The ophthalmic lens according to any one of claims 1 to 3, wherein:
the multiple first refractive regions are at least partially arranged in an annular zone with an inner diameter of 9.0 mm to an outer diameter of 15.0 mm centered on the center of the ophthalmic lens, or the multiple first refractive regions are at least partially arranged in an annular zone with an inner diameter of 9.5 mm to an outer diameter of 14.0 mm centered on the center of the ophthalmic lens, or the multiple first refractive regions are at least partially arranged in an annular zone with an inner diameter of 11.0 mm to an outer diameter of 14.0 mm centered on the center of the ophthalmic lens.

5. The ophthalmic lens according to any one of claims 1 to 4, wherein:
the multiple first refractive regions are arranged without gaps, and/or
the multiple second refractive regions are arranged with gaps.

6. The ophthalmic lens according to any one of claims 1 to 5, wherein:
the maximum size of the projection of each of the multiple first refractive regions and the multiple second refractive regions on the ophthalmic lens is independently selected from the range of 0.5 mm to 2.2 mm, and/or
the projection of each of the multiple first refractive regions and the multiple second refractive regions on the ophthalmic lens has a circular shape, and/or
the multiple first refractive regions and the multiple second refractive regions each have a surface shape selected from spherical, aspherical, or toroidal shapes, and/or
the multiple second refractive regions have equal areas on the projection on the ophthalmic lens.

7. The ophthalmic lens according to any one of claims 1-6, wherein:
each of the multiple first refractive regions has a dioptric power obtained by adding a positive dioptric power to the prescription power, and/or each of the multiple second refractive regions has a dioptric power obtained by adding a positive dioptric power to the prescription power, or
the dioptric power of the multiple first refractive regions is the same as the dioptric power of the multiple second refractive regions, or
along the radial direction of the ophthalmic lens, the dioptric power of the multiple first refractive regions and the multiple second refractive regions increases gradually or increases in a stepped manner with radial distance increasing, and/or the size of the multiple first refractive regions and the multiple second refractive regions decreases gradually or decreases in a stepped manner with radial distance increasing, or
along the radial direction of the ophthalmic lens, the dioptric power of the multiple first refractive regions and the multiple second refractive regions decreases gradually or decreases in a stepped manner with radial distance increasing, and/or the size of the multiple first refractive regions and the multiple second refractive regions increases gradually or increases in a stepped manner with radial distance increasing.

8. The ophthalmic lens according to any one of claims 1-7, wherein:
the maximum size of the central portion is selected from 3.0 to 11.0 mm, and/or
the central portion is a circular zone centered on the center of the ophthalmic lens, and the diameter of the circular zone is selected from 3.0 to 11.0 mm, and/or
the first zone is an annular zone centered on the center of the ophthalmic lens, and the inner diameter of the annular zone is selected from 3.0 to 11.0 mm, and the outer diameter of the annular zone is selected from 15.0 to 28.6 mm, and/or
the second zone is an annular zone centered on the center of the ophthalmic lens.

9. The ophthalmic lens according to any one of claims 1-8, wherein:
the total area ratio of the multiple first refractive regions in the first zone is greater than or equal to 60% and less than or equal to 78.5%, or greater than 63% and less than or equal to 78.5%, or greater than 66% and less than or equal to 78.5%, and/or
the total area ratio of the multiple second refractive regions in the second zone is less than 60%, or less than 57%, or less than 54%.

10. The ophthalmic lens according to any one of claims 1-9, wherein:
the first zone includes one or more first patterns, and a part or all of the first zone is a first annular zone centered on the center of the ophthalmic lens, with an inner diameter of 9 mm and an outer diameter of 15 mm, and the total area ratio of the multiple first refractive regions in any individual first pattern within the first annular zone is greater than 70% and less than 78.5%, or greater than 72% and less than 78.5%.

11. The ophthalmic lens according to any one of claims 1-10, wherein:
the first zone includes one or more first patterns, and a part or all of the multiple first refractive regions are arranged in the one or more first patterns, and/or
the second zone includes one or more second patterns, and a part or all of the multiple second refractive regions are arranged in the one or more second patterns.

12. The ophthalmic lens according to claim 11, wherein:
both the first pattern and the second pattern are annular patterns centered on the center of the ophthalmic lens, or
the second pattern is a sector annular pattern centered on the center of the ophthalmic lens.

13. The ophthalmic lens according to claim 11 or 12, wherein:
the spacing between any adjacent two second patterns are equal to the spacing between any adjacent two first patterns, and/or the spacing between any adjacent two second patterns are equal to the spacing between the adjacent first pattern and the second pattern, or
the spacing between any adj acent two second patterns, the spacing between any adjacent two first patterns, and/or the spacing between the adjacent first pattern and the second pattern is zero, or
the spacing between any adjacent two first patterns are less than or equal to 0.5 mm.

14. The ophthalmic lens according to any one of claims 11-13, wherein:
the number of first patterns is 1-4, and the number of second patterns is 1-15.

15. The ophthalmic lens according to any one of claims 11-14, wherein:
the first refractive regions are uniformly distributed within at least one first pattern, and/or
the second refractive regions are uniformly distributed within at least one second pattern.

16. The ophthalmic lens according to any one of claims 11-15, wherein:
within at least one first pattern, the edges of adjacent first refractive regions are contiguous to each other, and/or
within at least one first pattern, the spacing between the first refractive regions is selected from 0 to 0.5 mm, and/or
within at least one second pattern, the spacing between the second refractive regions is greater than the maximum spacing between the first refractive regions, and/or
within the multiple second patterns, the spacing between the second refractive regions in the second pattern decreases as the second patterns get closer to the center of the ophthalmic lens, and/or
within the patterns including all the first patterns and all the second patterns, the spacing between the first refractive regions or the second refractive regions in the pattern decreases as the patterns get closer to the center of the ophthalmic lens.

17. The ophthalmic lens according to any one of claims 11-16, wherein:
the total area ratio of the multiple first refractive regions within at least one first pattern is greater than or equal to 60% and less than or equal to 78.5%, or greater than or equal to 70% and less than or equal to 78.5%, and/or
in the case where the first zone includes multiple first patterns, the total area ratio of the first refractive regions within each first pattern is greater than or equal to 60% and less than or equal to 78.5%, and/or
in the case where the first zone includes multiple first patterns, the total area ratio of the first refractive regions within at least two first patterns is greater than or equal to 70% and less than or equal to 78.5%, and/or
the total area ratio of the multiple second refractive regions within at least one second pattern is less than 60% and greater than or equal to 30%, or less than 60% and greater than or equal to 35%, or less than 60% and greater than or equal to 40%, and/or
in the case where the second zone includes multiple second patterns, the total area ratio of the second refractive regions within each second pattern is less than 60% and greater than or equal to 30%.

18. The ophthalmic lens according to any one of claims 11-17, wherein:
in the case where the first zone includes multiple first patterns, the total area ratio of the first refractive regions in the first pattern increases as the first patterns get closer to the center of the ophthalmic lens, and/or
in the case where the second zone includes multiple second patterns, the total area ratio of the second refractive regions in the second pattern increases as the second patterns get closer to the center of the ophthalmic lens, and/or
the total area ratio of the first refractive regions in each first pattern is greater than the total area ratio of the second refractive regions in each second pattern.

19. The ophthalmic lens according to any one of claims 1-18, wherein:
the multiple first refractive regions are distributed along multiple rays or curves starting from the center of the ophthalmic lens, and/or
the multiple second refractive regions are distributed along multiple rays or curves starting from the center of the ophthalmic lens.

20. The ophthalmic lens according to claim 19, wherein each ray or curve is distributed with one or more first refractive regions and one or more second refractive regions, and/or the multiple rays or curves are evenly distributed on the ophthalmic lens.

21. The ophthalmic lens according to claim 19 or 20, wherein:
on the same ray or curve, the addition power of the first refractive regions is uniform, and/or the addition power of the second refractive regions is uniform, and/or the addition power of the first refractive regions and the second refractive regions is uniform, or
on the same ray or curve, the size of the first refractive regions is uniform, and/or the size of the second refractive regions is uniform, and/or the size of the first refractive regions and the second refractive regions is uniform, or
on the same ray or curve, along the direction away from the center of the ophthalmic lens, the changing trend in addition power of the first refractive regions is opposite to the changing trend in size, and/or the changing trend in addition power of the second refractive regions is opposite to the changing trend in size, or
on the same ray or curve, along the direction away from the center of the ophthalmic lens, the size of the first refractive regions and second refractive regions increases gradually or increases in a step-wise manner, and/or the addition power of the first refractive regions and second refractive regions decreases gradually or decreases in a step-wise manner.

22. The ophthalmic lens according to any one of claims 19 to 21, wherein adjacent first refractive regions and/or adjacent second refractive regions on the same ray or curve are contiguous to each other.

23. The ophthalmic lens according to any one of claims 19 to 22, wherein the number of said rays or curves is 16-40, or 26-35.

24. The ophthalmic lens according to any one of claims 19 to 23, wherein:
on each ray or curve, the number of first refractive regions is less than the number of second refractive regions, and/or
in the case that the number of said rays is 2n, said rays form n straight lines.

25. The ophthalmic lens according to any one of claims 1 to 24, wherein:
the multiple first refractive regions and multiple second refractive regions are configured such as to maintain substantially constant image jump throughout the first zone and second zone.

26. The ophthalmic lens according to claim 25, wherein:
the coefficient of variation of the image jump of the multiple first refractive regions and the multiple second refractive regions is less than 20% throughout the first zone and second zone.

27. The ophthalmic lens according to claim 25, wherein:
the coefficient of variation of the image jump of the multiple second refractive regions is less than 15%, or less than 12%, or less than 10% throughout the second zone.

28. The ophthalmic lens according to any one of claims 1 to 27, wherein:
the total area ratio of the first refractive regions set on the temporal side of the first zone is different from the total area ratio of the first refractive regions set on the nasal side of the first zone, and/or
the addition power of the first refractive regions is asymmetrically set on the temporal side and nasal side of the first zone, and/or
the total area ratio of the second refractive regions set on the temporal side of the second zone is different from the total area ratio of the second refractive regions set on the nasal side of the second zone, and/or
the addition power of the second refractive regions is asymmetrically set on the temporal side and nasal side of the second zone.

29. The ophthalmic lens according to claim 28, wherein:
the total area ratio of the first refractive regions set on the temporal side of the first zone is greater than the total area ratio of the first refractive regions set on the nasal side of the first zone, and/or
the average addition power of the first refractive regions set on the temporal side of the first zone is greater than the average addition power of the first refractive regions set on the nasal side of the first zone, and/or
the total area ratio of the second refractive regions set on the temporal side of the second zone is greater than the total area ratio of the second refractive regions set on the nasal side of the second zone, and/or
the average addition power of the second refractive regions set on the temporal side of the second zone is greater than the average addition power of the second refractive regions set on the nasal side of the second zone.

30. The ophthalmic lens according to any one of claims 1 to 27, wherein:
the ophthalmic lens is divided into multiple sectorial zones with the center of the ophthalmic lens as the origin, and in each sectorial zone, the first refractive regions are set independently from other sectorial zones and the second refractive regions are set independently from other sectorial zones.

31. A frame eyeglass comprising the ophthalmic lens according to any one of claims 1 to 30.
